# EUROPÄISCHE PATENTSCHRIFT

(11) **EP 1 246 523 B1**
(45) Veröffentlichungstag und Bekanntmachung des Hinweises auf die Patenterteilung: **31.03.2004**
(21) Anmeldenummer: 01907332.9
(22) Anmeldetag: 04.01.2001
(51) Int. Cl.: A01M 1/20, A01M 25/00

(54) **KÖDERVORRICHTUNG**
BAIT DEVICE
SYSTEME D'APPAT

(30) Priorität: 07.01.2000 DE 10000326
(43) Veröffentlichungstag der Anmeldung: 09.10.2002
(73) Patentinhaber: Hoppe, Klaus, 46117 Oberhausen (DE); Oser-Veltins, Peter, 46147 Oberhausen (DE)
(72) Erfinder: Hoppe, Klaus, 46117 Oberhausen (DE); Oser-Veltins, Peter, 46147 Oberhausen (DE)
(74) Vertreter: Viering, Jentschura & Partner
(86) Internationale Anmeldenummer: PCT/DE2001/000009
(87) Internationale Veröffentlichungsnummer: WO 2001/049110

(56) Entgegenhaltungen:
- EP-A- 0 360 960
- EP-A- 0 664 952
- WO-A-97/40667
- DE-A- 3 819 956
- US-A- 4 945 673
- US-A- 5 832 658

## Beschreibung

Die vorliegende Erfindung betrifft eine Ködervorrichtung und deren Verwendung zur Bekämpfung von schädlichen Insekten und Kleinsäugern.

Im Stand der Technik ist eine Reihe von Giftköderhaltern bekannt. So beschreibt beispielsweise die EP 360960 einen Giftköderhalter mit einem Unterteil und einem Abdeckteil, wobei das Unterteil einen peripheren flachen Boden, eine innere Schrägenanordnung sowie eine Vielzahl von Wandelementen aufweist, die in einer speziellen geometrischen Anordnung zueinander festgelegt sind, wobei die Abdeckung des Giftköderhalters eine Vielzahl von Öffnungen für den Zutritt von Insekten aufweist und die Öffnungen entlang radial orientierter Seiten der Flügel angeordnet sind.

Eine weitere Vorrichtung zum Töten von schädlichen Kleinsäugern ist beschrieben in der DE 3819956. Die darin beschriebene Vorrichtung weist einen durch eine Feder bewegbaren Schlagbügel, einen Halter, einen Mechanismus zur Verriegelung und Auslösung des Schlagbügels und einer Aufnahme für einen Köder auf. Dabei wird der Schlagbügel durch einen mit einem Haken ausgerüsteten Hebel verriegelt und auch wieder ausgelöst, der an einem Ende beweglich am Halter angebracht ist und in Arbeitsstellung mit seinem freien Ende auf einer vom Schlagbügel unabhängigen, innerhalb des Halters angeordneten Niederlage der Vorrichtung aufliegt.

Die EP 664952 beschreibt eine flache Köderstelle für Küchenschaben, bestehend aus einer oberen und einer unteren Platte sowie Seitenwänden, die die obere und die untere Platte miteinander verbinden, wobei die Seitenwände mindestens eine kleine Öffnung und mindestens eine größere Öffnung haben, mit einem Behältnis für einen giftigen Köder, das auf der Innenseite einer Seitenwand befestigt ist. Durch eine spezielle Ausgestaltung von verschiedengroßen Öffnungen wird eine dem Wachstumsstadium der Küchenschabe angepasste Bewegung der zu fangenden Küchenschabe in den Köderhalter ermöglicht.

Im Stand der Technik sind keine Lösungen von Insektenköderstationen oder Giftköderhalter für schlecht zugängliche Bereiche bei abgehängten Decken, mit Schutzwänden oder Verkleidungen versehenen Einrichtungen sowie Schaltschränken, Kabelkanälen etc., die leicht eingesetzt werden können, bekannt. Im Stand der Technik ist es für die Schädlingsbekämpfung in diesen Fällen erforderlich, die Abdeckungen oder Verkleidungen oder gar die Vorrichtungen selbst zu demontieren und gegen die Insekten gezielt mit Spritzmitteln bzw. dem Ausgelegen von Insektenködern vorzugehen.

Derartige Montagen erfordern jedoch einen erheblichen zeitlichen Aufwand und bedingen, dass der Betrieb der Anlage zu dem jeweiligen Zeitpunkt unterbrochen wird, so dass die Schädlingsbekämpfung entsprechend vorgenommen werden kann. Infolge der notwendigen Stilllegung der Anlage oder der Betriebe und Betriebeinrichtungen entstehen erhebliche Stillstandskosten. Entsprechendes gilt auch für den Privatbereich.

Im Stand der Technik sind keine Lösungen für dieses Problem bekannt. Es besteht daher die Aufgabe der Erfindung, eine vereinfachte Bekämpfung von Schädlingen wie Insekten und Kleinsäugern an schwer zugänglichen Stellen zu ermöglichen, wobei eine Demontage von Abdeckplatten, Sichtschutz- oder Arbeitsschutzeinrichtungen sowie Verkleidungen nicht erforderlich ist.

Erfindungsgemäß wird dies gelöst durch Bereitstellung einer Ködervorrichtung zum Einsetzen in eine Verkleidungs- oder Abdeckungselement mit einer Köderbuchse mit einem zum Inneren der Verkleidung weisenden offenen Ende und einem vom Inneren der Verkleidung wegweisenden geschlossenen Ende, einem in der Köderbuchse angeordneten Köderhalter für einen Fraßköder und Mitteln zur Sicherung der Köderbuchse gegen ein Herausfallen aus der Verkleidung.

Die vorliegende Erfindung ermöglicht die Verkürzung des Arbeitsaufwandes und verhindert eine Beschädigung der Verkleidungen der Decken und Böden infolge der Demontage und Neumontage. Ferner können die Schädlinge gezielt bekämpft werden, und gesundheitliche Schäden durch mögliche Kontamination des Wartungspersonals werden vermieden.

In einer einfachen Form ist die Köderbuchse aus einem Rohrstück mit runder, rechteckiger oder quadratischer Grundfläche gebildet, das nach außen durch eine Abdeckplatte verschlossen ist. In dieser Köderbuchse kann ein Köderhalter angeordnet sein, beispielsweise eine flache Schale, oder eine Ausbuchtung der Köderbuchse vorgesehen sein, in der sich ein Fraßköder befindet. Der Köderhalter kann auch in einer Halterung in der Köderbuchse drehbar gelagert sein, so dass die Köderbuchse in eine waagerechte oder senkrechte Verkleidung eingesteckt werden kann.

In der einfachsten Form kann die erfindungsgemäße Ködervorrichtung in Form eines Blindstopfens für Verkleidungen oder Kabelkanäle ausgebildet sein, in den eine den Schädlingen angemessene Menge an Fraßköder eingebracht wird und der dann in eine Bohrung in die Verkleidung eingesteckt oder eingeschraubt wird. Die vorliegende Erfindung ist daher auch auf die Verwendung eines solchen Blindstopfens, vorzugsweise mit einem zylindrischen Querschnitt und vorzugsweise mit einem Außengewinde versehenen, als Ködervorrichtung zur Aufnahme eines Fraßköders gerichtet.

Durch Bereitstellung der erfindungsgemäßen Ködervorrichtung wird ermöglicht, dass dieser nach Einsetzen in die Abdeckwand oder das Gehäuse der Vorrichtung gegen ein Herausfallen gesichert den Fraßköder für die zu vernichtenden Insekten oder Schädlinge wie Nager bereithält, wobei eine Demontage der Abdeckwand oder der Blechverkleidung nicht erforderlich ist. Bei dem Fraßköder kann es sich um einen Fraßköder mit oder ohne darin enthaltenen Giftstoffen für den zu vernichtenden Schädling handeln. Bei einem unvergifteten Fraßköder kann zusätzlich eine mechanische Fangvorrichtung für den zu vernichtenden Schädling vorhanden sein. Bei der mechanischen Fangvorrichtung kann es sich um eine Schlagbügelfalle oder um eine Falle zum Lebendfangen, beispielsweise in Form eines Drahtkorbes, handeln.

Die Köderbuchse wird bevorzugt im Bereich des Befalls befestigt, in dem die Schädlinge sich bewegen, um den Zugang zu der Ködervorrichtung zu erleichtern. Ein Nachfüllen oder ein Austausch des Köders ist nach dem Abziehen der Ködervorrichtung aus der Verkleidung einfach möglich, so dass Stillstandszeiten minimiert oder sogar vermieden werden.

Vorzugsweise ist in der erfindungsgemäßen Ködervorrichtung ein Sichtfenster mit einer Scheibe aus einem durchsichtigen Material beispielsweise aus Glas oder Plexiglas, vorgesehen, um den Füllzustand der Ködervorrichtung kontrollieren zu können.

In einer bevorzugten Ausführungsform ist an dem geschlossenen Ende der Köderbuchse ein entfernbarer Verschlussdeckel vorgesehen, der weiter bevorzugt mit zweiten Sicherungsmitteln, vorzugsweise nach Art eines Schlosses ausgebildet, gegen ein unbeabsichtigtes Entfernen ausgestattet ist. In einer besonders bevorzugten Ausführungsform ist der Verschlussdeckel an der Köderbuchse über ein Scharnier schwenkbar festgelegt. An der dem Scharnier gegenüberliegenden Seite des Verschlussdeckels kann eine Verschlussfeder oder ein Schloss vorgesehen sein, so dass ein Öffnen und Schwenken des Deckels erst nach Einführen eines geeigneten Werkzeuges oder Schlüssels möglich ist.

Obgleich im einfachsten Fall die Ausführung der Ködervorrichtung in der Fassung des Hauptanspruches mit Köderbuchse, Köderhalter und Mitteln zur Sicherung der Köderbuchse gegen ein Herausfallen aus der Verkleidung ausreichend ist, ist es vorteilhaft, die Köderbuchse in einer Einbaubuchse zu sichern, die vorzugsweise fest in der Abdeckung oder Blechverkleidung verbleibt.

Bei dieser Ausführungsform wird zunächst die Einbaubuchse in die Verkleidung geschoben und gegen ein Herausfallen gesichert. Dabei können die Sicherungsmittel gegen das Herausfallen durch entsprechende Vorsprünge und Einkerbungen der Köderbuchse bzw. der Einbaubuchse ausgestaltet sein und in diesem Fall ist keine besondere umfassende Bearbeitung der Blechverkleidung oder der Abdeckung erforderlich. Je nach Wandstärke des Trägermaterials, d.h. beispielweise der Blechverkleidung etc., kann die Einbaubuchse in der Einstecktiefe entsprechend angepasst werden, wobei die den Fraßköder in einem Köderhalter aufnehmende Köderbuchse entsprechend von außen in die Einbaubuchse eingesteckt wird.

In einer einfachsten Form können die Sicherungsmittel gegen das Herausfallen in Form von Klemmverzahnungen an der Einbaubuchse und/oder der Köderbuchse ausgebildet sein, die beim Einführen der Köderbuchse oder der Einbaubuchse in die Verkleidung diese verklemmen und so gegen ein Herausfallen sichern.

Es ist jedoch bevorzugt, dass Köderbuchse und Einbaubuchse derart mit Mitteln zur Verhinderung des Herausfallens versehen sind, die ein einfaches Einführen der Köderbuchse in die Verkleidung oder Einbaubuchse und gleichzeitig eine sichere Halterung der Köderbuchse in der Verkleidung oder Einbaubuchse ermöglichen, ohne dass die Köderbuchse durch Unbefugte aus der Verkleidung oder Einbaubuchse entfernt werden kann.

Dies wird in einer bevorzugten Ausführungsform dadurch erreicht, dass die auf Seiten der Köderbuchse vorgesehenen Sicherungsmittel in Form von zumindest einer, bevorzugt zwei oder mehr Halteklammern ausgestaltet sind, die bei Einführen der Köderbuchse in die Verkleidung oder Einbaubuchse ungehindert eingeführt werden können, dann jedoch durch Drehen der Köderbuchse die Halteklammern mit Sicherungsnasen oder einem innen befindlichen Teilkragen an der Einbaubuchse in Eingriff gebracht werden und einrasten.

In der bevorzugten Ausführungsform sind Einbaubuchse und Köderbuchse jeweils in Form von zylindrischen Buchsen, vorzugsweise mit radial nach außen abstehenden Kragen, ausgebildet, wobei die Köderbuchse im Außendurchmesser dem Innendurchmesser der Einbaubuchse angepasst ist. Bevorzugterweise sind auch die Kragen der Buchsen so zueinander bemessen, dass der Außendurchmesser der Kragen gleich ist.

Zum Sichern der Köderbuchse in der Einbaubuchse werden die innenseitig an der Köderbuchse vorgesehenen Halteklammern mit den Sicherungsnasen dadurch in Eingriff gebracht, dass die Köderbuchse in der Einbaubuchse aus einer Einführposition in eine Sicherungsposition gedreht wird. In dieser Sicherungsposition oder Gebrauchsposition ist die Köderbuchse in der Einbaubuchse gegen ein Herausziehen gesichert.

Das Verdrehen der Köderbuchse in der Einbaubuchse erfolgt am einfachsten unter Zuhilfenahme eines Schlüssels oder einer Abziehvorrichtung, die in zumindest eine entsprechend angepasste Öffnung in der Köderbuchse eingreifen. Die Öffnung kann gleichzeitig als Sichtfenster dienen, um den Füllzustand der Köderschale beobachten zu können. Mittels einer Abdeckblende können die Öffnungen für die Abziehvorrichtung, bzw. das Sichtfenster verschlossen werden, so dass ein Eindringen von Staub und Spritzwasser ausgeschlossen wird. Um eine Verwendung der erfindungsgemäßen Köderbuchse nicht nur in senkrechten Trägermaterialien, wie Blechverkleidungen von Maschinen, Küchen, etc. zu ermöglichen, sondern ebenso ein Einsetzen in Deckenverkleidungen, ist die Verwendung einer schwenkbaren Köderschale bevorzugt.

Das Material der erfindungsgemäßen Ködervorrichtung ist nicht besonders eingeschränkt. Aus Festigkeits- und Gewichtsgründen ist die Verwendung von Kunststoff oder Metall bevorzugt. Die Größe der Ködervorrichtung ist ebenfalls nicht begrenzt und wird nur durch den Einsatzzweck bestimmt. So kann die Ködervorrichtung beispielsweise eine Köderbuchse mit einem Durchmesser von 20 cm oder mehr umfassen, in die die weiteren Bauteile der Ködervorrichtung integriert sind. Eine derartige Größe ist insbesondere bei Verwendung einer mechanischen Fangvorrichtung notwendig und sinnvoll.

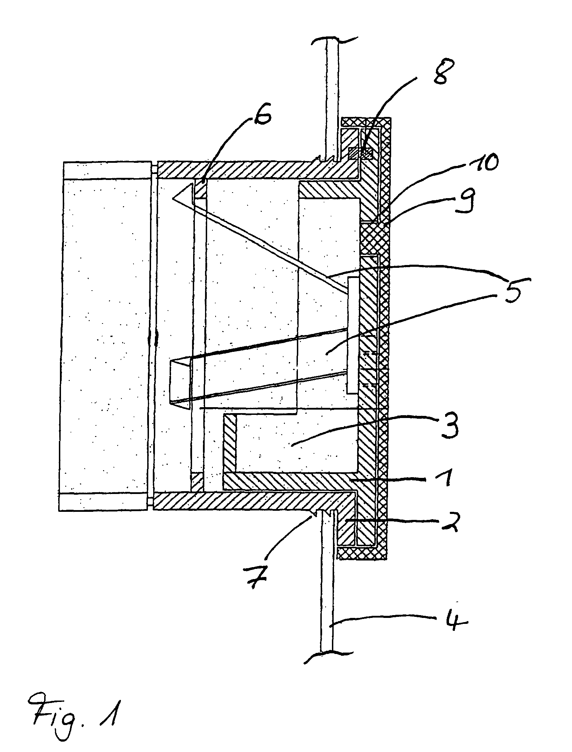

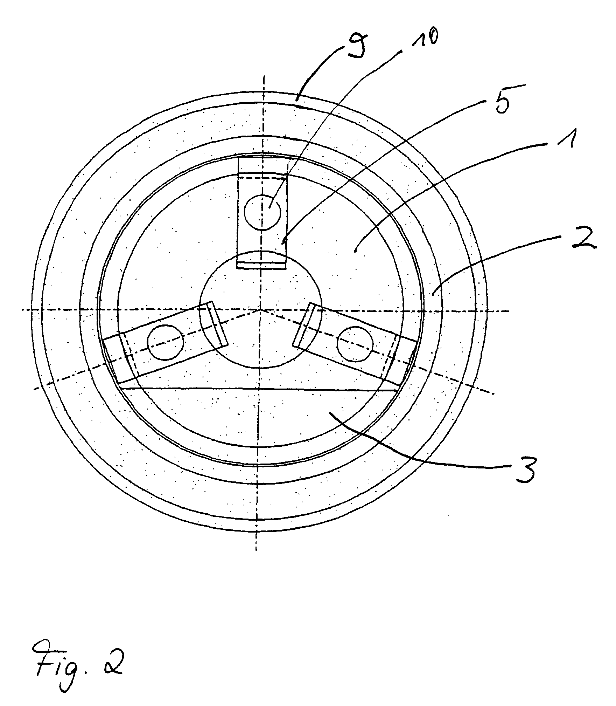

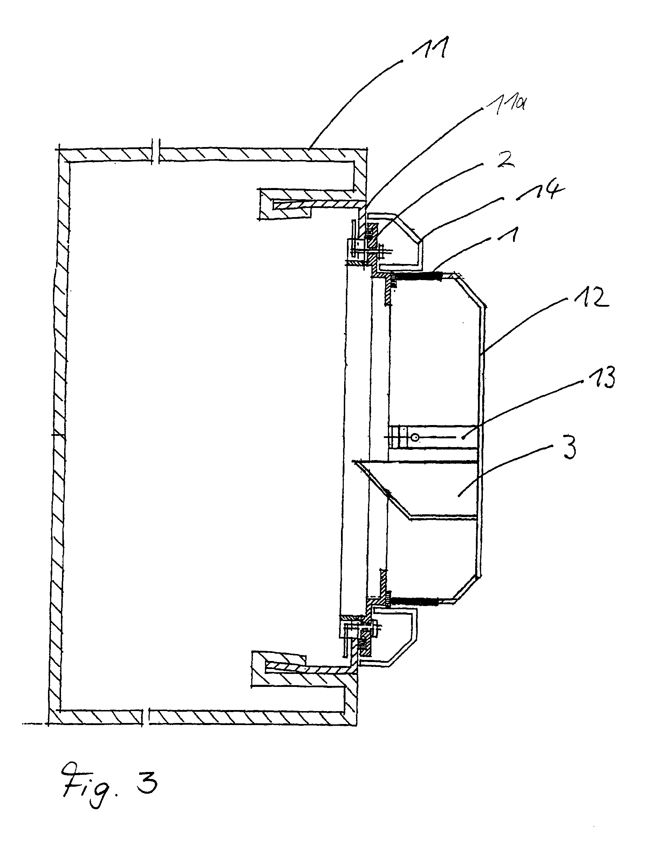

Die vorliegende Erfindung wird durch die beiliegenden Figuren 1 bis 3 weiter erläutert. Dabei zeigt die Figur 1 einen Längsschnitt durch eine erfindungsgemäße Ausführung der Ködervorrichtung, während Figur 2 eine Draufsicht von innen auf die erfindungsgemäße Köderstation von Figur 1 zeigt. Figur 3 zeigt eine weitere Ausführungsform der erfindungsgemäßen Ködervorrichtung, die insbesondere für den Einbau in Kabelkanäle oder ähnliche Stellen, wo der mangelnde Innenraum ein Einschieben der Ködervorrichtung erschwert, zu verwenden ist.

Wie in Figur 1 zu sehen ist, umfasst die erfindungsgemäße Ködervorrichtung die Köderbuchse 1 mit Köderschale 3, die in Einbaubuchse 2 eingeschoben und über die Halteklammern 5, die mit den Nasen 6 im eingebauten Zustand in Eingriff stehen, in der Einbaubuchse 2 gesichert ist. Die Einbaubuchse selbst ist über die Klemmverzahnung 7 im Trägermaterial 4, das eine Blechverkleidung, eine Abdeckplatte, eine abgehängte Decke sein kann, gesichert.

Die Köderbuchse und Einbaubuchse sind im Einbauzustand zusätzlich über die Arretierungsnase 8 gegeneinander arretiert. Die Öffnungen 10 für die Abziehvorrichtung, bzw. den Schlüssel zum Verdrehen der Köderbuchse in der Einbaubuchse sind über die Abdeckplatte 9 verschlossen.

Zum innenseitigen Ende der Einbaubuchse hin sind Sollbruchstellen 11 vorgesehen, über die eine Anpassung der Länge der Einbaubuchse an die Einbaugegebenheiten durch Abbrechen des innenseitigen Randbereiches möglich ist.

Wie in der Figur 2 in der Draufsicht gezeigt, ist die in der Einbaubuchse 2 eingesteckte Köderbuchse 1 mit Köderschale 3 sowie die an der Einbaubuchse eingreifenden Federklammern 5 gezeigt. Die Einbaubuchse 2 umgreifend, ist außen der den Spalt zwischen Einbaubuchse und Köderbuchse verschließende Buchsenkragen der Abdeckplatte 9 zu sehen, die ebenfalls die Öffnung 10 für die Abziehvorrichtung, die in den Figuren nicht dargestellt ist, verschließt.

Wie in Figur 3 im Querschnitt einer weiteren Ausführungsform , die insbesondere für den Einbau in Kabelkanäle geeignet ist, gezeigt, ist die Einbaubuchse 2 in einen Kabelkanal 11 mit Kabelkanaldeckel 11a eingesteckt. An der Einbaubuchse 2 ist die Köderbuchse 1 festgelegt, die wiederum durch den Verschlussdeckel 12 nach außen verschlossen ist. An dem Verschlussdeckel 12 ist die Sicherungslasche 13, die Köderschale 3 sowie das in der Zeichnung nicht dargestellte Scharnier zum Schwenken des Verschlussdeckels 12 angeordnet. Der Übergang zwischen Einbaubuchse 2 und Köderbuchse 1 ist durch den Verblendrahmen 14 verdeckt. Die in Figur 3 gezeigte Ausführungsform wird insbesondere bei solchen Verkleidungen und Kanälen verwendet, bei denen der Innenraum durch Kabel, Konstruktionselemente etc. ein weiteres Einschieben der Köderbuchse oder Einbaubuchse erschwert.

## Patentansprüche

1. Ködervorrichtung zum Einsetzen in eine Verkleidung, mit einer Köderbuchse (1) mit einem zum Inneren der Verkleidung weisenden offenen Ende und einem vom Inneren der Verkleidung wegweisenden geschlossenen Ende, einem in der Köderbuchse (1) angeordneten Köderhalter (3) für einen Fraßköder und Mitteln zur Sicherung der Köderbuchse (1) gegen ein Herausfallen aus der Verkleidung, **dadurch gekennzeichnet, dass** eine die Köderbuchse (1) zumindest teilweise umschließende Einbaubuchse (2) vorhanden ist, wobei als Mittel zur Sicherung der Köderbuchse (1) gegen ein Herausfallen aus der Verkleidung oder der Einbaubuchse (2) zumindest eine Halteklammer (5) vorgesehen ist, die bei Einführen der Köderbuchse (1) in die Verkleidung oder die Einbaubuchse (2) ungehindert eingeführt werden kann und durch Drehen der Köderbuchse (1) mit Sicherungsnasen an der Verkleidung oder der Einbaubuchse (2) in einer Rastposition in Eingriff gebracht wird.

2. Ködervorrichtung nach Anspruch 1, wobei die Einbaubuchse (2) an dem, dem außenseitigen Ende der Köderbuchse (1) zugewandten Ende einen Kragen aufweist.

3. Ködervorrichtung nach Anspruch 1, wobei die Ködervorrichtung zusätzlich eine mechanische Fangvorrichtung für Schädlinge umfasst.

4. Ködervorrichtung nach Anspruch 1, wobei die Köderbuchse an dem geschlossenen Ende einen entfernbaren Verschlussdeckel (12) aufweist.

5. Ködervorrichtung nach Anspruch 4, wobei der Verschlussdeckel (12) mit zweiten Sicherungsmitteln (13) gegen ein unbeabsichtigtes Entfernen ausgestattet ist.

6. Ködervorrichtung nach Anspruch 5, wobei die zweiten Sicherungsmittel (13) nach Art eines Schlosses ausgebildet sind.

7. Ködervorrichtung nach einem der Ansprüche 4 bis 6, wobei der Verschlussdeckel (12) an der Köderbuche (1) über ein Scharnier schwenkbar festgelegt ist.

8. Ködervorrichtung nach Anspruch 1, wobei die Köderbuchse (1) an dem außenseitigen Ende der Köderbuchse (1) einen Kragen aufweist.

9. Ködervorrichtung nach einem der vorhergehenden Ansprüche, wobei die Köderbuchse (1) an dem geschlossenen Buchsenende zumindest eine Öffnung (10) zum Einführen einer Abziehvorrichtung aufweist.

10. Ködervorrichtung nach Anspruch 9, wobei eine Abdeckplatte (9) zum Verschließen der zumindest einen Öffnung (10) zum Einführen der Abziehvorrichtung vorhanden ist.

11. Ködervorrichtung nach einem vorhergehenden Ansprüche, wobei der Köderhalter (3) in einer Halterung drehbar gelagert ist.

12. Verwendung einer Ködervorrichtung zum Einsetzen in eine Verkleidung zur Aufnahme eines Fraßköders, wobei die Ködervorrichtung mit einer Köderbuchse (1) mit einem zum Inneren der Verkleidung weisenden offenen Ende und einem vom Inneren der Verkleidung wegweisenden geschlossenen Ende und Mitteln zur Sicherung der Köderbuchse (1) gegen ein Herausfallen aus der Verkleidung versehen ist, **dadurch gekennzeichnet, dass** eine die Köderbuchse (1) zumindest teilweise umschließende Einbaubuchse (2) vorhanden ist, wobei als Mittel zur Sicherung der Köderbuchse (1) gegen ein Herausfallen aus der Verkleidung oder der Einbaubuchse (2) zumindest eine Halteklammer (5) vorgesehen ist, die bei Einführen der Köderbuchse (1) in die Verkleidung oder die Einbaubuchse (2) ungehindert eingeführt werden kann und durch Drehen der Köderbuchse (1) mit Sicherungsnasen an der Verkleidung oder der Einbaubuchse (2) in einer Rastposition in Eingriff gebracht wird.

13. Verwendung nach Anspruch 12, wobei die Ködervorrichtung in Form eines mit einem Außengewinde versehenen Abdeckstopfens mit einem zylindrischen Querschnitt für Verkleidungen oder Kabelkanäle ausgebildet ist.

## Claims

1. Bait device for inserting into panelling, having a bait bushing (1) with an open end oriented towards the interior of the panelling and a closed end oriented away from the interior of the panelling, having a bait holder (3) which is arranged in the bait bushing (1) and is intended for edible bait, and having means for securing the bait bushing (1) against falling out of the panelling, **characterized in that** an installation bushing (2) at least partially enclosing the bait bushing (1) is provided, and that said means for securing the bait bushing (1) against falling out of the panelling or of the installation bushing being at least one retaining clamp (5) which can be introduced without obstruction when the bait bushing (1) is introduced into the panelling or the installation bushing (2) and, by virtue of the bait bushing being rotated, is brought into latching engagement with securing noses on the panelling or the installation bushing (2).

2. Bait device according to claim 1, the installation bushing (2) having a collar at the end which is directed towards the outer end of the bait bushing (1).

3. Bait device according to claim 1, the bait device additionally comprising a mechanical trap for pests.

4. Bait device according to claim 1, the bait bushing having a removable closure cover (12) at the closed end.

5. Bait device according to claim 4, the closure cover (12) being equipped with second securing means (13) for securing against unintended removal.

6. Bait device according to claim 5, the second securing means (13) being defined in the manner of a lock.

7. Bait device according to anyone of the claims 4 to 6, the closure cover (12) being secured in a pivotable manner on the bait bushing (1) via a hinge.

8. Bait device according to claim 1, the bait bushing (1) having a collar at the outer end of the bait bushing (1).

9. Bait device according to anyone of the preceding claims, the bait bushing (1), at the closed bushing end, having at least one opening (10) for the introduction of a withdrawal device.

10. Bait device according to claim 9, a covering plate (9) being provided for closing the at least one opening (10) for the introduction of the withdrawal device.

11. Bait device according to anyone of the preceding claims, the bait holder (3) being mounted rotatably in a securing means.

12. Use of a bait device for inserting into panelling for the purpose of accommodating edible bait, the bait device being provided with a bait bushing (1) with an open end oriented towards the interior of the panelling and a closed end oriented away from the interior of the panelling, and with means for securing the bait bushing (1) against falling out of the panelling, **characterized in that** an installation bushing (2) at least partially enclosing the bait bushing (1) is provided and that said means for securing the bait bushing (1) against falling out of the panelling or of the installation bushing being at least one retaining clamp (5) which can be introduced without obstruction when the bait bushing (1) is introduced into the panelling or the installation bushing (2) and, by virtue of the bait bushing being rotated, is brought into latching engagement with securing noses on the panelling or the installation bushing (2).

13. Use according to claim 12, the bait device being designed in the form of a dummy stopper, provided with an external thread and having a cylindrical cross section, for panellings or cable ducts.

## Revendications

1. Dispositif d'appât destiné à être inséré dans un habillage, comportant une douille à appât (1) possédant une extrémité ouverte dirigée vers l'intérieur de l'habillage, et une extrémité fermée, tournée à l'opposé de l'intérieur de l'habillage, un dispositif de retenue d'appât (3) disposé dans la douille à appât (1) pour un appât comestible et des moyens pour empêcher une chute de la douille à appât (1) à partir de l'habillage, **caractérisé en ce qu'**il est prévu une douille de montage (2), qui entoure au moins partiellement la douille à appât (1), et dans lequel il est prévu comme moyens pour empêcher une chute de la douille à appât (1) à partir de l'habillage ou de la douille de montage (2), au moins une pince de retenue (5), qui peut être introduite librement lors de l'introduction de la douille à appât (1) dans l'habillage ou dans la douille de montage (2) et est amenée à s'engager, par rotation de la douille à appât (1), avec des becs de retenue situés sur l'habillage ou sur la douille de montage (2), dans une position d'encliquetage.

2. Dispositif d'appât selon la revendication 1, dans lequel la douille de montage (2) comporte un collet sur l'extrémité tournée vers l'extrémité côté extérieur de la douille à appât (1).

3. Dispositif d'appât selon la revendication 1, dans lequel le dispositif d'appât comporte en outre un dispositif mécanique de retenue pour parasites.

4. Dispositif d'appât selon la revendication 1, dans lequel la douille à appât comporte, sur l'extrémité fermée, un couvercle de fermeture amovible (12).

5. Dispositif d'appât selon la revendication 4, dans lequel le couvercle de fermeture (12) est équipé de seconds moyens de sécurité (13) empêchant un retrait intempestif.

6. Dispositif d'appât selon la revendication 5, dans lequel les seconds moyens de sécurité (13) sont agencés à la manière d'un verrou.

7. Dispositif d'appât selon l'une des revendications 4 à 6, dans lequel le couvercle de fermeture (12) sur la douille à appât (1) est fixé de manière à pouvoir pivoter au moyen d'une charnière.

8. Dispositif d'appât selon la revendication 1, dans lequel la douille à appât (1) possède un collet sur l'extrémité, située côté extérieur, de la douille à appât (1) .

9. Dispositif d'appât selon l'une des revendications précédentes, dans lequel la douille à appât (1) possède, sur son extrémité fermée, au moins une ouverture (10) pour l'introduction d'un dispositif de prélèvement.

10. Dispositif d'appât selon la revendication 9, dans lequel une plaque de fermeture (9) est prévue pour fermer la au moins une ouverture (10) pour l'introduction du dispositif de prélèvement.

11. Dispositif d'appât selon l'une des revendications précédentes, dans lequel le dispositif (3) de retenue d'appât est monté de manière à pouvoir tourner dans un support.

12. Utilisation d'un dispositif d'appât destiné à être inséré dans un habillage pour loger un appât comestible, le dispositif d'appât étant pourvu d'une douille à appât (1) comportant une extrémité ouverte tournée vers l'intérieur de l'habillage, et une extrémité fermée tournée à l'opposé de l'intérieur de l'habillage, et des moyens pour empêcher une chute de la douille à appât (1) hors de l'habillage, **caractérisée en ce qu'**il est prévu une douille de montage (2), qui entoure au moins partiellement la douille à appât (1), et dans lequel comme moyens pour empêcher une chute de la douille à appât (1) hors de l'habillage ou hors de la douille de montage (2), il est prévu au moins une pince de retenue (5) qui peut être introduite librement dans l'habillage ou dans la douille de montage (2) lors de l'insertion de la douille à appât (1) et est amenée en prise par rotation de la douille à appât (1) avec des becs de sécurité sur la douille de montage (2), dans une position d'encliquetage.

13. Utilisation selon la revendication 12, dans laquelle le dispositif d'appât se présente sous la forme d'un bouchon de fermeture pourvu d'un filetage extérieur et possédant une section transversale cylindrique pour des habillages ou des conduits à câbles.
